# EUROPÄISCHE PATENTSCHRIFT

(11) **EP 0 804 869 B1**
(45) Veröffentlichungstag und Bekanntmachung des Hinweises auf die Patenterteilung: **03.11.1999**
(21) Anmeldenummer: 97106612.1
(22) Anmeldetag: 22.04.1997
(51) Int. Cl.: A01B 15/14, A01B 3/46

(54) **Anhänge- oder Aufsattelpflug**
Hitchable or trailable plough
Charrue attelable ou accrochable

(30) Priorität: 29.04.1996 DE 29607607 U
(43) Veröffentlichungstag der Anmeldung: 05.11.1997
(73) Patentinhaber: Rabewerk GmbH + Co., 49152 Bad Essen (DE)
(72) Erfinder: Holsing, Dieter, 49152 Bad Essen (DE)
(74) Vertreter: Missling, Arne, Dipl.-Ing.

(56) Entgegenhaltungen:
- EP-A- 0 374 052
- DE-A- 2 240 335
- DE-A- 4 301 399
- DE-C- 350 527
- FR-A- 2 310 686
- FR-A- 2 664 124
- US-A- 2 060 196
- US-A- 4 121 852

## Beschreibung

Die Erfindung betrifft einen Anhänge- oder Aufsattelpflug mit einem vorderen und einem hinteren Pflugkörper tragenden Pflugrahmen und einem beide Pflugrahmen verbindenden Zwischenrahmen, der von einem von einem Stabilisator gehaltenen Stützrad oder von einem Karren getragen ist und in dessen Bereich der Abstand der Pflugkörper größer ist als der Abstand der übrigen Pflugkörper untereinander (siehe DE-A-4301399).

Pflüge der eingangs genannten Art sind beispielsweise aus der EP-A-0 544 555 bekannt. Diese Pflüge weisen ein vorderes Pflugrahmenteil auf sowie einen Karren in einem mittleren Pflugrahmenteil sowie ein hinter dem Karren angeordnetes hinteres Pflugrahmenteil. Der Abstand der Pflugkörper im Bereich des Karrens ist größer als der übrige Abstand der Pflugkörper untereinander.

Bei diesen Pflügen stellt es ein Problem dar, die Schnittbreite des ersten Pflugkörpers des hinteren Pflugrahmens exakt der Schnittbreite der übrigen Pflugkörper anzupassen. Auch wenn die Schnittbreite des ersten Pflugkörpers in der Ebene exakt den Schnittbreiten der anderen Pflugkörper angepaßt ist, so ändert sich dieses sofort, wenn mit einem derarten Pflug am Hang gepflügt wird oder aber wenn dieser Pflug auf unterschiedliche Bodenverhältnisse stößt. Der Pflug erfährt dann eine gewisse Verkantung zur Fahrtrichtung mit der Folge, daß sich die Schnittbreite des ersten Pflugkörpers des hinteren Pflugrahmenteiles aufgrund des größeren Abstandes dieses Pflugkörpers zum vorausgehenden Pflugkörper, anders als die übrigen, ändert. Die Schnittbreiten aller Pflugkörper stimmen somit nicht mehr überein, so daß sich im Endeffekt im mittleren Bereich eine ungleichmäßige Bodenbearbeitung ergibt. Das aus dieser Druckschrift bekannte horizontal liegende Gelenk, das eine Beweglichkeit zwischen dem vorderen und dem hinteren Pflugrahmenteil gewährleistet, dient nur dazu, die Bodenanpassung bei Überfahren von Bodenwellen zu verbessern.

Aus der US-PS-3 731 748 ist ein Pflug bekannt, bei dem das hintere Pflugrahmenteil an das vordere Pflugrahmenteil über eine Zugstange angehängt ist, wobei die Schnittbreite durch Anpassung des Zugpunktes variiert wird. Auch hier ist die Einstellung nur für ideale ebene Böden gleichbleibend. Beim Pflügen am Hang oder aber auch bei wechselnden Böden ist eine gleichbleibende Schnittbreite aller Pflugkörper nicht zu gewährleisten.

Der Erfindung liegt die Aufgabe zugrunde, einen Pflug der eingangs genannten Art so auszubilden, daß eine einfache Anpassung der Schnittbreite des ersten Pflugkörpers des hinteren Pflugrahmens an die Schnittbreite der übrigen Pflugkörper gegeben ist, daß es möglich wird, herkömmlich ausgebildete Pflugrahmen oder Pflüge einem vorauslaufenden Pflugrahmen anzubauen und daß darüber hinaus eine einfache Anpassung des Anlagendruckes gegeben ist.

Diese Aufgabe wird erfindungsgemäß mit den Merkmalen des Anspruches 1 gelöst.

Diese zwischen dem vorderen und dem hinteren Pflugrahmen angeordnete Verstelleinrichtung gestattet es, den hinteren Pflugrahmen parallel zu sich selbst und relativ zum vorderen Pflugrahmen so weit zu verstellen, daß aufgrund wechselnder Böden oder aber auch beim Pflügen am Hang die Schnittbreite des ersten Pflugkörpers des hinteren Pflugrahmens an die Schnittbreite der übrigen Pflugkörper anpaßbar ist. Die Verstelleinrichtung besteht aus einer Kulissenführung, in der ein Kulissenstein geführt ist, wobei diese Verstelleinrichtung ähnlich der Verstelleinrichtung ausgebildet ist, wie sie für die Verstellung der Schnittbreite des ersten Pflugkörpers bei Pflügen üblicherweise eingesetzt wird. Diese Ausbildung hat den Vorteil, daß als hinteres Pflugteil herkömmliche Pflugrahmen oder Pflüge angeschlossen werden können, so daß praktisch im Baukastenprinzip ein Pflug kostengünstig verlängerbar ist.

Der zwischen dem vorderen und hinteren Pflugrahmen liegende Zwischenrahmen weist vorteilhaft des weiteren ein horizontales Gelenk auf, das im wesentlichen senkrecht zur Fahrtrichtung liegt und das die Bodenanpassung des hinteren Pflugrahmens verbessert.

Der Zwischenrahmen ist vorteilhaft lösbar am vorderen Pflugrahmen angeordnet und kann als selbständige Einheit ausgebildet werden, wobei am Zwischenrahmen das Stützrad bzw. der Karren angeschlossen ist, wobei das Fahrgestell des Karrens bzw. des Stützrades über eine lotrechte Achse mit dem Zwischenrahmen verbunden sein kann. Mittels einer Verstelleinrishtung, die beispielsweise aus einer Spindel oder einem Hydraulikzylinder bestehen kann, kann somit der Karren bzw. das Stützrad relativ zum Zwischenrahmen und damit auch zu dem gesamten Pflugrahmen verschwenkt werden, was insbesondere dann vorteilhaft ist, wenn man den Anlagendruck mittels des Stützrades bzw. des Karrens verändern will. Mittels der linearen Verstelleinrichtung wird eine einwandfreie Schnittbreite aller Pflugkörper erhalten, während das Fahrverhalten durch die Einstellung der Laufrichtung des Karrens relativ zum Pflugrahmen verändert werden kann.

Ein erfindungsgemäßer Pflug ist vorteilhaft als Drehpflug auszubilden und kann vorteilhaft mit einer Verstelleinrichtung für die Verstellung der Schnittbreite aller Pflugkörper versehen sein. Auch dann ist eine gleichmäßige Schnittbreite aller Pflugkörper gewährleistet.

Ein Ausführungsbeispiel der Erfindung ist im folgenden anhand der Zeichnung näher beschrieben. In dieser zeigen
- Fig. 1: eine Draufsicht auf einen erfindungsgemäß ausgebildeten Pflug und
- Fig. 2: das mittlere Teil des Pfluges gemäß Fig. 1 in vergrößerter Darstellung.

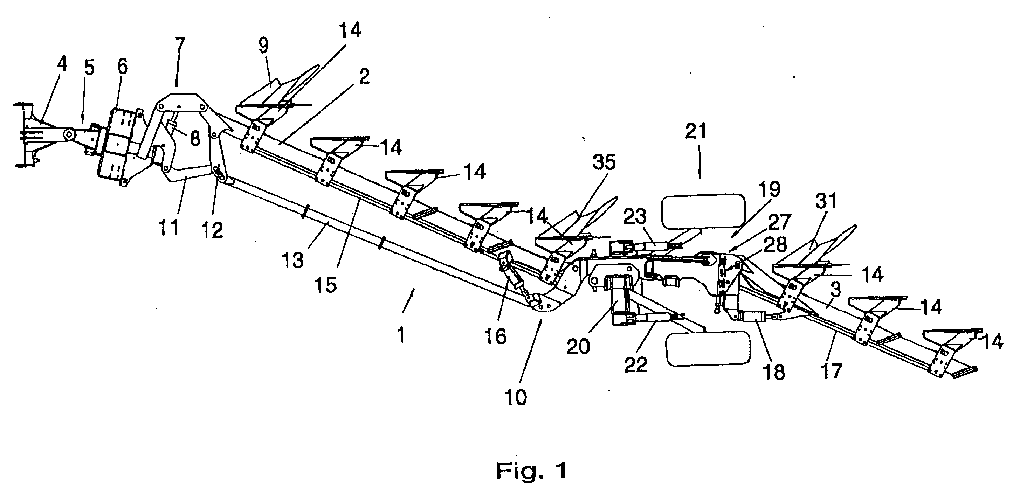

In Fig. 1 ist ein Aufsatteldrehpflug 1 dargestellt, der einen vorderen Pflugrahmen 2 sowie einen hinteren Pflugrahmen 3 besitzt. Der Aufsatteldrehpflug 1 besitzt ein Pflugvordergestell 4, das in üblicher Weise an die Unterlenker und an den Oberlenker eines nicht dargestellten Schleppers anschließbar ist. Das Pflugvordergestell 4 ist über ein Kreuzgelenk 5 mit einer den vorderen Pflugrahmen 2 haltenden Traverse 6 verbunden. Die Traverse 6 nimmt auch die Drehzylinder für das Wenden der Pflugkörper auf.

Der Pflugrahmen 2 ist über Anschlußmittel 7 mit der Traverse 6 verbunden, wobei ein Hydraulikzylinder 8 zur Verschiebung des Pflugrahmens relativ zur Traverse dient. Mit Hilfe des Hydraulikzylinders kann eine Feineinstellung der Schnittbreite des ersten Pflugkörpers 9 des vorderen Pflugrahmens 2 vorgenommen werden. Die Grobeinstellung der Schnittbreite des ersten Pflugkörpers erfolgt mittels eines an verschiedenen Bohrungen 10 eines Karrens 21 anschließbaren Stabilisator 13, der parallel zum vorderen Pflugrahmen 2 verläuft. Über Lenker 11, 12 ist der Stabilisator 13 mit Pflugrahmen 2 und Traverse 6 verbunden. Die die Pflugkörper (9, 31, 35) tragenden Konsolen 14 sind schwenkbar am Pflugrahmen 2 angeordnet, wobei ihr freies Ende an einem Parallelogrammlenker 15 angelenkt ist. An diesem Lenker greift ein Hydraulikzylinder 16 an, mit dem beim Verschieben des Parallelogrammlenkers 15 die Schnittbreite aller Pflugkörper des vorderen Pflugrahmens 2 verschwenkt werden. Der Übersichtlichkeit halber sind nicht alle Pflugschare mit eingezeichnet worden.

Der hintere Pflugrahmen 3 ist entsprechend dem vorderen Pflugrahmen aufgebaut. Auch hier sind die Konsolen 14 schwenkbar am Pflugrahmen 3 angeordnet, wobei ihr jeweils freies Ende über einen Parallelogrammlenker 17 miteinander verbunden sind. Die Verstellung der Schnittbreite sämtlicher Pflugkörper wird hier mittels eines Zylinders 18 bewirkt.

Der hintere Pflugrahmen 3 ist mit dem vorderen Pflugrahmen 2 über einen Zwischenrahmen 19 verbunden, wobei an dem Zwischenrahmen 19 gleichzeitig das Fahrgestell 20 des den Zwischenrahmen 19 tragenden Karrens 21 befestigt ist. Hydraulikzylinder 22, 23 dienen zum Ausheben des Zwischenrahmens 19 und damit der Pflugrahmen 2, 3.

Der Zwischenrahmen 19 besteht aus zwei Teilen 24, 25, wobei das vordere Teil 24 am Pflugrahmen 2 angeschlossen ist. Das hintere Teil 25 des Zwischenrahmens 19 ist über eine im wesentlichen horizontal liegende Achse 26 am vorderen Teil 24 des Zwischenrahmens 19 angeschlossen. Diese Achse gestattet eine im wesentliche vertikale Verschwenkung zur Bodenanpassung des hinteren Pflugrahmens 3 relativ zum vorderen Pflugrahmen 2.

Am hinteren Teil 25 des Zwischenrahmens 19 ist eine Verstelleinrichtung 27 vorgesehen, die eine lineare Verschiebung des hinteren Pflugrahmens 3 zum vorderen Pflugrahmen 2 gewährleistet. Die Verstelleinrichtung 27 besteht aus einer Kulissenführung 28 sowie einem Kulissenstein 29, der in der Führung 28 verschiebbar ist. An der Führung 28 ist eine Spindel 30 befestigt, die in eine Gewindebohrung in dem Teil 25 des Zwischenrahmens 19 eingreift. Mit Hilfe dieser Spindel 30 kann der Kulissenstein 29 und damit der hintere Pflugrahmen 3 relativ zu dem Zwischenrahmen 19 parallel zu sich selbst seitlich verschoben werden. Hierdurch kann die Schnittbreite des ersten Pflugkörpers 31 des hinteren Pflugrahmens 3 eingestellt werden. Die Spindel 30 kann auch durch einen Hydraulikzylinder ersetzt werden, so daß die Einstellung vom Schleppersitz aus vorgenommen werden kann.

Die Verstelleinrichtung 27 ist in der Art und Weise wie bei handelsüblichen Pflügen ausgebildet, so daß mittels dieser Verstelleinrichtung des Zwischenrahmens 19 herkömmliche Pflugrahmen oder Pflüge an den mit dem Zwischenrahmen 19 versehenen vorderen Pflugrahmen 2 angeschlossen werden können. Aufgrund der linearen Verstelleinrichtung ist eine relativ große seitliche Verstellmöglichkeit gegeben, so daß der Pflug auch mit einer Verstelleinrichtung ausgebildet werden kann, die eine Verstellung der Schnittbreite sämtlicher Pflugkörper zuläßt. Der hintere Pflugrahmen 3 ist somit in einfacher Weise an den vorderen Pflugrahmen 2 in seiner Schnittbreite anpaßbar, wobei diese Anpassung bei wechselnden Bodenverhältnissen oder beim Pflügen am Hang schnell vorzunehmen ist.

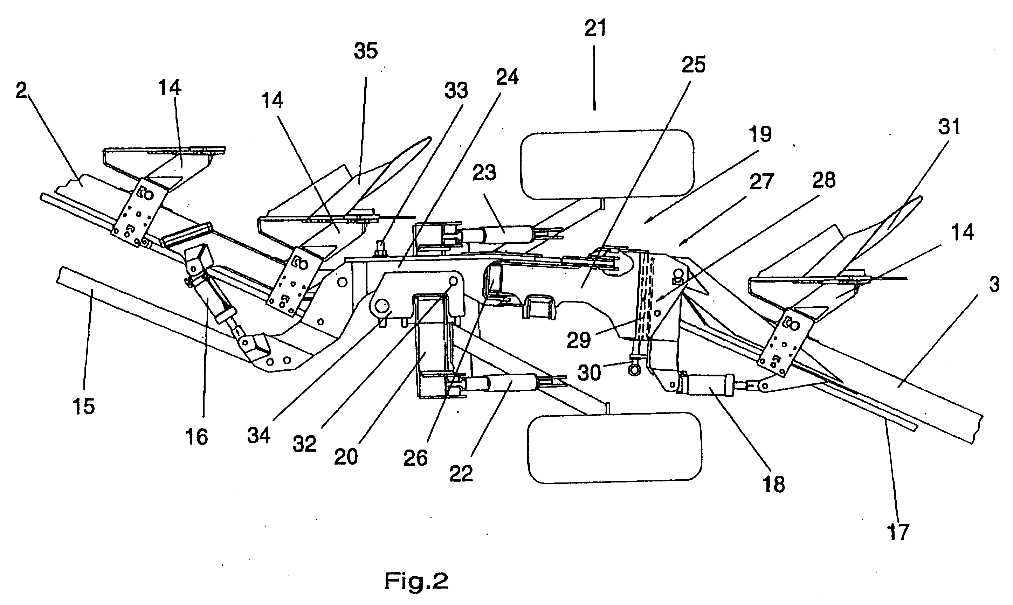

Ein weiteres Problem bei den Pflügen mit einem größeren Pflugkörperabstand zwischen den beiden Pflugrahmen besteht darin, daß bei einer Verkantung des Pfluges, wie sie bei wechselnden Bodenverhältnissen oder beim Pflügen am Hang vorkommen kann, auch die Laufrichtung der Räder des Karrens oder eines Stützrades verändert wird, so daß sich hierdurch auch der Anlagendruck des Pfluges insgesamt ändert. Um diese Laufrichtung korrigieren zu können, ist das Fahrgestell 20 beispielsweise des Karrens gemäß Fig. 2 über eine lotrechte Achse 32 relativ zum Zwischenrahmen 19 verschwenkbar ausgebildet. Zur Verschwenkung des Zwischenrahmens 19 dient eine Spindel 33, die einerseits am Teil 24 des Zwischenrahmens 19 und andererseits an einem Halter 34 angreift, der mit der lotrechten Achse 32 sowie dem Fahrgestell 20 verbunden ist. Mit Hilfe dieser Spindel 33, die gleichfalls durch einen Hydraulikzylinder ersetzbar ist, läßt sich in einfacher Weise und schnell die Laufrichtung der Räder des Karrens bzw. eines Stützrades zum Zwischenrahmen einstellen.

Der Zwischenrahmen einschließlich des Karrens bzw. eines Stützrades läßt sich auch als gesonderte Einheit herstellen. Dieser kann an einen üblichen vorderen Pflugrahmen 2 angeflanscht werden, so daß dieser vordere Pflugrahmen durch einen weiteren handelsüblichen Pflugrahmen verlängerbar ist. Dieser als Baueinheit hergestellte Zwischenrahmen gestattet es somit, praktisch standardmäßig ausgebildete Pflüge zu verlängern, wobei gleichzeitig eine gute Anpaßbarkeit des hinteren Pflugrahmens gewährleistet ist.

### Aufstellung der Bezugszeichen

- 1: Aufsatteldrehpflug
- 2: vorderer Pflugrahmen
- 3: hinterer Pflugrahmen
- 4: Pflugvordergestell
- 5: Kreuzgelenk
- 6: Traverse
- 7: Anschlußmittel
- 8: Hydraulikzylinder
- 9: erster Pflugkörper
- 10: Lochreihe
- 11: Lenker
- 12: Lenker
- 13: Stabilisator
- 14: Konsole
- 15: Parallelogrammlenker
- 16: Hydraulikzylinder
- 17: Parallelogrammlenker
- 18: Hydraulikzylinder
- 19: Zwischenrahmen
- 20: Fahrgestell
- 21: Karren
- 22: Hydraulikzylinder
- 23: Hydraulikzylinder
- 24: Teil (von 19)
- 25: Teil (von 19)
- 26: horizontale Achse
- 27: Verstelleinrichtung
- 28: Kulissenführung
- 29: Kulissenstein
- 30: Spindel
- 31: erster Pflugkörper
- 32: lotrechte Achse
- 33: Spindel
- 34: Halter
- 35: Pflugkörper

## Patentansprüche

1. Anhänge- oder Aufsattelpflug mit einem vorderen (2) und einem hinteren (3) Pflugkörper tragenden Pflugrahmen und einem beide Pflugrahmen (2, 3) verbindenden Zwischenrahmen (19), der von einem von einem Stabilisator (13) gehaltenen Stützrad oder von einem Karren (21) getragen ist und in dessen Bereich der Abstand der jeweils dem Zwischenrahmen (19) nächstliegenden Pflugkörper (31, 35) des vorderen bzw. hinteren Pflugrahmens größer ist als der Abstand der übrigen Pflugkörper untereinander, dadurch gekennzeichnet, daß der Zwischenrahmen (19) eine Verstelleinrichtung (27) aufweist, die aus einer Kulissenführung (28) und einem in dieser geführten Kulissenstein (29) besteht und zur seitlichen linearen Verschiebung des vorderen und des hinteren Pflugrahmens (2, 3) zueinander dient.

2. Pflug nach Anspruch 1, dadurch gekennzeichnet, daß die Verstelleinrichtung (27) über eine Spindel (30) oder einen Hydraulikzylinder betätigbar ist.

3. Pflug nach einem der Ansprüche 1 oder 2, dadurch gekennzeichnet, daß der Zwischenrahmen (19) über ein im wesentlichen senkrecht zu den Anlagen der Pflugkörper verlaufendes und im wesentlichen horizontal liegendes Gelenk (26) unterteilt ist.

4. Pflug nach einem der Ansprüche 1 bis 3, dadurch gekennzeichnet, daß die Verstelleinrichtung (27) in ihrer Abmessung der Verstelleinrichtung für die Verstellung der Schnittbreite des ersten Pflugkörpers herkömmlicher Pflüge angepaßt ist.

5. Pflug nach einem der Ansprüche 1 bis 4, dadurch gekennzeichnet, daß der Zwischenrahmen (19) lösbar am vorderen Pflugrahmen (2) angebracht ist.

6. Pflug nach Anspruch 5, dadurch gekennzeichnet, daß der Zwischenrahmen (19) einschließlich des Stützrades oder Karrens (21) eine selbständige Einheit bildet.

7. Pflug nach einem der Ansprüche 1 bis 6, dadurch gekennzeichnet, daß das Fahrgestell (20) des Stützrades oder des Karrens (21) relativ zum Zwischenrahmen (19) über eine in Arbeitsstellung im wesentlichen lotrecht liegende Achse (32) erschwenkbar ausgebildet ist.

8. Pflug nach einem der Ansprüche 1 bis 7, dadurch gekennzeichnet, daß das Fahrgestell (20) des Stützrades oder des Karrens (21) an einem Halter (34) angeschlossen ist, die über die lotrechte Achse (32) am Zwischenrahmen (19) angeschlossen ist und die mittels einer Spindel (33) oder eines Hydraulikzylinders relativ zu diesem verstellbar ist.

9. Pflug nach einem der Ansprüche 1 bis 8, dadurch gekennzeichnet, daß der Pflug ein Drehpflug ist.

10. Pflug nach einem der Ansprüche 1 bis 9, dadurch gekennzeichnet, daß der Pflug eine Verstelleinrichtung (15, 16; 17, 18) für die Verstellung sämtlicher Pflugkörper des Pfluges aufweist.

## Claims

1. A trailed or semi-mounted plough comprising a front (2) and a rear (3) plough frame carrying ploughing members, and an intermediate frame (19) connecting the two plough frames (2, 3) and carried by a supporting wheel held by a stabiliser (13) or carried by a carriage (21), in the region of the intermediate frame (19) the distance between the ploughing members (31, 35) on the front and the rear plough frame and arranged closest to the intermediate frame (19) being greater than the distance between the remaining ploughing members, characterised in that the intermediate frame (19) has an adjusting device (27) comprising a sliding guide (28) and a sliding block (29) guided therein and provided for the lateral linear displacement of the front and the rear plough frame (2, 3) relative to one another.

2. A plough according to claim 1, characterised in that the adjusting device (27) is actuatable via a spindle (30) or a hydraulic cylinder.

3. A plough according to either one of claims 1 and 2, characterised in that the intermediate frame (19) is divided by a joint (26) extending substantially perpendicularly to the ploughing member arrangements and disposed substantially horizontally.

4. A plough according to any one of claims 1 to 3, characterised in that the dimensions of the adjusting device (27) are adapted to the adjusting device for adjusting the cutting width of the first ploughing member of conventional ploughs.

5. A plough according to any one of claims 1 to 4, characterised in that the intermediate frame (19) is detachably mounted on the front plough frame (2).

6. A plough according to claim 5, characterised in that the intermediate frame (19), together with the supporting wheel or carriage (21), forms an independent unit.

7. A plough according to any one of claims 1 to 6, characterised in that the base frame (20) of the supporting wheel or the carriage (21) is pivotable relative to the intermediate frame (19) about an axis (32) arranged substantially perpendicularly in the operating position.

8. A plough according to any one of claims 1 to 7, characterised in that the base frame (20) of the supporting wheel or the carriage (21) is connected to a mount (34) connected via the perpendicular axis (32) to the intermediate frame (19) and adjustable relative thereto by means of a spindle (33) or a hydraulic cylinder.

9. A plough according to any one of claims 1 to 8, characterised in that the plough is a rotary plough.

10. A plough according to any one of claims 1 to 9, characterised in that the plough has an adjusting device (15, 16; 17, 18) for adjusting all the ploughing members of the plough.

## Revendications

1. Charrue traînée ou semi-portée, comportant un cadre de charrue avant (2) et un cadre de charrue arrière (3) portant des corps de charrue et un cadre intermédiaire (19) reliant les deux cadres de charrue (2, 3), qui est porté par une roue de support tenue par un stabilisateur (13) ou par un chariot (21) et dans la zone duquel la distance entre les corps de charrue (31, 35) et les cadres de charrue avant et arrière respectivement les plus proches du cadre intermédiaire (19) est plus grande que la distance des corps de charrue restants entre eux, caractérisée en ce que le cadre intermédiaire (19) comporte un dispositif de réglage (27) composé d'un guide de coulisse (28) et d'un coulisseau (29) guidé dans celui-ci et servant au décalage linéaire latéral des cadres de charrue avant et arrière (2, 3) l'un par rapport à l'autre.

2. Charrue selon la revendication 1, caractérisée en ce que le dispositif de réglage (27) peut être actionné par une broche (30) ou un vérin hydraulique.

3. Charrue selon l'une des revendications 1 ou 2, caractérisée en ce que le cadre intermédiaire (19) est divisé par une articulation (26) disposée essentiellement perpendiculairement aux contreseps des corps de charrue et située essentiellement horizontalement.

4. Charrue selon l'une des revendications 1 à 3, caractérisée en ce que le dispositif de réglage (27) a une dimension adaptée au dispositif de réglage servant au réglage de la largeur de coupe du premier corps de charrue de charrues courantes.

5. Charrue selon l'une des revendications 1 à 4, caractérisée en ce que le cadre intermédiaire (19) est fixé de manière amovible au cadre de charrue avant (2).

6. Charrue selon la revendication 5, caractérisée en ce que le cadre intermédiaire (19) y compris la roue de support ou le chariot (21) forme une unité autonome.

7. Charrue selon l'une des revendications 1 à 6, caractérisée en ce que le châssis (20) de la roue de support ou du chariot (21) est conçu pour pouvoir pivoter par rapport au cadre intermédiaire (19) par l'intermédiaire d'un axe (32) qui se trouve essentiellement vertical en position de travail.

8. Charrue selon l'une des revendications 1 à 7, caractérisée en ce que le châssis (20) de la roue de support ou du chariot (21) est raccordé à un support (34) qui est raccordé par l'axe vertical (32) au cadre intermédiaire (19) et qui est réglable par rapport à celui-ci au moyen d'une broche (30) ou d'un vérin hydraulique.

9. Charrue selon l'une des revendications 1 à 8, caractérisée en ce que la charrue est une charrue brabant.

10. Charrue selon l'une des revendications 1 à 9, caractérisée en ce que la charrue comporte un dispositif de réglage (15, 16; 17, 18) pour le réglage de tous les corps de charrue de la charrue.
